# EUROPEAN PATENT APPLICATION

(11) **EP 1 841 224 A1**
(43) Date of publication of application: **03.10.2007**
(21) Application number: 06020033.4
(22) Date of filing: 25.09.2006
(51) Int. Cl.: H04N 7/01

(54) **Advertisements processing for digital cinema**

(30) Priority: 17.03.2006 KR 20060024765
(71) Applicant: Dongyoung Itech Co., Ltd., 942 Taechi-3dong Kangnam-gu, Seoul 135-725 (KR)
(72) Inventor: Hwang, Euy Jin, Kangnam-gu Seoul 135-280 (KR)
(74) Representative: Winter, Brandl, Fürniss, Hübner Röss, Kaiser, Polte Partnerschaft Patent- und Rechtsanwaltskanzlei

(57) **Abstract**

Disclosed herein are a system and method for creating multimedia files for digital cinema advertising. The system including a digitizing device, an up-conversion device, a digital restoration device, a color correction device, a signal insertion device, a multiple channel conversion device, a multitrack recording device, a synchronization device, and a Storage Area Network (SAN). The digitizing device outputs multimedia content as a digital video file and a digital audio file. The up-conversion device converts the frame rate of the digital video file into a frame rate appropriate for a DCI standard. The digital restoration device restores the degradation of the image quality of the digital video file. The color correction device improves the colors of the video of the digital video file. The signal insertion device inserts various predetermined signals into the digital video file and the digital audio file. The multiple channel conversion device divides the digital audio file into multiple channels. The multitrack recording device generates a combined digital audio file. The synchronization device synchronizes the digital video file with the digital audio file using the sync signal. The mastering device performs mastering on the synchronized digital video and audio files using standard encoding, and thus generating a final master digital multimedia file. The SAN temporarily stores intermediate results generated by the respective devices.

## Description

### Related Applications

The present disclosure relates to subject matter contained in priority Korean Application No. 10-2006-0024765 filed on 17 March 2006, which is herein expressly incorporated by reference in its entirety.

### BACKGROUND OF THE INVENTION

### 1. Field of the Invention

The present invention relates generally to a system and method for creating multimedia files for digital cinema advertising and, more particularly, to a system and method for creating multimedia files for digital cinema advertising, which reconstruct digital multimedia files, each having relatively high image quality and three-dimensional sound, from various types of multimedia content produced as television advertisements, and allow the digital multimedia files to be played at movie theaters that support a digital cinema format.

### 2. Description of the Related Art

Recently, with the rapid development of communication and semiconductor technology, method of screening films is changing. That is, the film screening method is changing from an analog film screening method to a digital file screening method (hereinafter, referred to as a 'digital cinema' method). Such a digital cinema method is characterized in that it can implement high-quality images and sounds, and the quality of images and sounds does not degrade, so that repeated playback can be unlimitedly performed, copies that are identical to the original moving image data can be created, and all types of content (for example, sports events and dramas) having moving image formats, including a movie format, can be played, in contrast to a conventional film screening method.

Such characteristics will be described from the point of view of an audience, production/distribution companies, and theaters. First, from the point of view of an audience, the digital cinema is advantageous in that images clearer than those of films can be viewed, sound of 8 or more channels more than 5.1 channel sound, can be listened to, and images can be viewed without the occurrence of variation in colors of a video, film graininess and noise. Second, from the point of view of production/distribution companies, the digital cinema is advantageous in that production costs and post-production costs are reduced, costs required for reproducing films are extremely reduced, it is not necessary to keep the films, and compatibility with different media is easily realized. Third, from the point of view of theaters, the digital cinema method is advantageous in that it allow a factor for a competitive advantage to be secured by the provision of high-quality images and sounds, and expenses can be reduced. As a result, the digital cinema method has synergic effects due to the efficiency of the entire film industry and reduced costs.

Meanwhile, for improving of the image of businesses and publicizing of products or services (hereinafter collectively referred to as 'advertising'), many advertisements are produced and Televisions (TVs) are widely used as media for the advertisements, so that the advertisements are generally produced for TV broadcasting. However, TV advertisements are generally produced as intermediate/low level advertisements, each having an aspect ratio of 3:4 and a resolution of 720*486 or 640*480 (hereinafter collectively referred to as 'Standard Definition (SD)'). For this reason, the TV advertisements are not fit for the Digital Cinema Initiatives (DCI) standard, which supports a High Density (HD) level advertisement having an aspect ratio of 9:16 and a resolution of 1080*1920, or a 2K level advertisement having an aspect ratio of 1:1.35 and a resolution of 1080 (1536)*2048, therefore the TV advertisements cannot be played without change at digital cinema theaters, and the image quality thereof is degraded. Further, a TV generally employs a 2-channel speaker, so that the TV advertisements are also produced in a 2-channel analog audio format. In this case, when the TV advertisements are played without change at a movie theater supporting a 5.1 or more channel speaker system, only two-dimensional sound, the sound quality of which is degraded, is played back, so that a good impression cannot be given to an audience. As a result, in conventional multimedia files produced for TV broadcasting, the advertisement effect thereof decreases due to the degradation in the quality of images and sounds, therefore there is a problem in that it is difficult to increase the price of theater advertising.

### SUMMARY OF THE INVENTION

Accordingly, the present invention has been made keeping in mind the above problems occurring in the prior art, and an object of the present invention is to provide a system and method for creating multimedia files for digital cinema advertising, which reconstruct various types of multimedia content, which are produced as TV advertisements, into digital multimedia files, each having relatively high image quality and three-dimensional sound, and allow the digital multimedia files to be played at movie theaters that support a digital cinema format, thus maximizing the advertising effect.

In order to accomplish the above object, the present invention provides a system for creating multimedia files for digital cinema advertising, including a digitizing device for outputting multimedia content, which is produced as a TV advertisement, as a digital video file and a digital audio file; an up-conversion device for converting the frame rate of the digital video file, output from the digitizing device, into a frame rate appropriate for a DCI standard, and converting the resolution of the digital video file into a relatively higher resolution; a digital restoration device for restoring the degradation of the image quality of the digital video file, which occurs during the up-conversion process; a color correction device for improving the colors of the video of the digital video file; a signal insertion device for inserting various predetermined signals, including a sync signal, into the digital video file and the digital audio file, which are output from the digitizing device; a multiple channel conversion device for dividing the digital audio file into multiple channels, and performing a sequencing task, insertion of sound effects, or correction of tone; a multitrack recording device for generating a combined digital audio file by recording digital audio files, which are obtained through conversion into the multiple channels by the multiple channel conversion device, together in a predetermined format; a synchronization device for synchronizing the digital video file with the digital audio file using the sync signal; a mastering device for performing mastering on the synchronized digital video and audio files using standard encoding, and thus generating a final master digital multimedia file; and a Storage Area Network (SAN) for temporarily storing intermediate results generated by the respective devices.

In addition, the present invention provides a method of creating multimedia files for digital cinema advertising, including the steps of (a) operating a tape playback device, digitally capturing any of various types of analog format multimedia content that are played back using various tapes on which original advertisements are stored or accessing a digital recording medium, and generating a digital multimedia file; (b) dividing the digital multimedia file into a digital audio file and a digital video file; (c) performing full-up conversion of converting the frame rate of the digital video file, which is obtained through the division, into a frame rate appropriate for a DCI standard, and performing up-conversion of converting the resolution of the digital video file into a relatively higher resolution; (d) performing digital restoration of inserting various signals, including a sync signal, into the up-converted digital video file and restoring the degradation of image quality, which occurs during the up-conversion process, and performing color correction for improving colors of the digitally restored video; (e) performing the insertion of the various signals, including the sync signal, conversion into multiple channels, and multitrack recording on the digital audio file obtained through the division; and (f) encoding the digital video file and the digital audio file according to a predetermined DCI standard while the digital video file and the digital audio file, which has undergone step (d) and step (e), are synchronized, and thus generating a final digital multimedia file.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a block diagram showing the construction of a system that can implement a method of creating multimedia files according to the present invention; and
FIG. 2 is a flowchart illustrating the method of creating multimedia files according to the present invention.

### DESCRIPTION OF THE PREFERRED EMBODIMENTS

A system and method for creating multimedia files according to a preferred embodiment of the present invention are described in detail with reference to the accompanying drawings below.

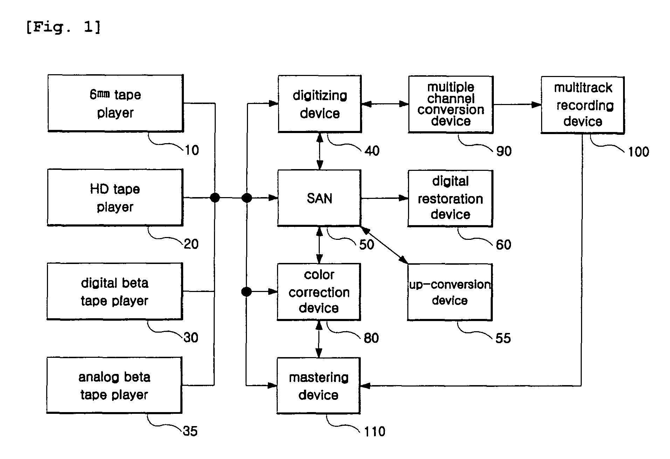

FIG. 1 is a block diagram showing the construction of a system that a method of creating multimedia files according to the present invention. The system that can implement the method of creating multimedia files according to the present invention, as shown in FIG. 1, includes a multimedia source playback device, that is, a 6mm tape player 10, which plays back various media, for example, magnetic recording tapes, such as a 6mm tape, an HD tape, a digital beta tape and an analog beta tape, in which original TV advertisements are recorded, an HD tape player 20, a digital beta tape player 30 or an analog beta tape player 35, a digitizing device 40 for digitally capturing analog multimedia content, which is played back by the multimedia source playback device, and converting the captured analog multimedia content into a corresponding digital multimedia file, a Storage Area Network (SAN) 50, that is, a network type large volume storage medium, for storing various intermediate results generated through a process of generating a final digital multimedia file, an up-conversion device 50 for up-conversion a video file digitized by the digitizing device 40 so as to be appropriate for the DCI standard, that is, performing full-up conversion of converting the frame rate of the video file into a frame rate appropriate for the DCI standard, for example, converting 30 fps to 24 fps and, at the same time, converting an SD level into an HD level or a 2K level, a signal insertion device (not shown) used to insert various signals, for example, a sync signal for synchronizing video content with audio content, which will be played back together, and a 1 kHz signal, which is a reference signal necessary for various types of time code and Dolby encoding, a digital restoration device 60 for restoring the degradation of image quality, for example, graininess, dusts, scratches and interlacing, which occurs during the up-conversion process, that is, the process of converting a low-resolution video into a high-resolution video, a color correction device 80 for improving the colors of a digitally restored video using a function of improving primary and secondary colors, a multiple channel conversion device 90a for performing various correction tasks, such as sequencing, sound effect insertion or the correction of tone, other than a task of dividing a digital audio file into multiple channels, a multitrack recording device 100 for generating a combined digital audio file by recording the digital audio file, which is converted into multiple channels by the multiple channel conversion device 90, in a predetermined format, for example, 'aiff' or 'wav' format, a synchronization device (not shown) for synchronizing the digital video file, which is generated by the color correction device 80, with the digital audio file, which is generated by the multitrack recording device 100, and a mastering device 110 for performing final mastering on the digital video file and the digital audio file, which has passed through the synchronization device, using the JPEG2000 encoding method, which is defined in the DCI standard, and creating a single completed master digital multimedia file.

In the above-described construction, the respective devices may be connected using a dedicated optical cable. The 6mm tape player 10 may be implemented using, for example, a tape player, which is manufactured by Sony Co. and has the model number "DSR-45," the HD tape player 20 may be implemented using, for example, an HD camcorder, which is manufactured by a Sony Co. and has the model number "F500," the digital beta tape player 30 may be implemented using, for example, a digital beta camcorder, which is manufactured by a Sony Co. and has the model number "A500," and the analog beta tape player 35 may be implemented using, for example, an analog beta camcorder, which is manufactured by a Sony Co. and has the model number "beta cam SP."

It is preferred that the digitizing device 40 be provided with various drivers, which can access various digital data recording media, for example, a Compact Disc (CD), a Digital Versatile Disc (DVD) and a hard disc, in order to process digital multimedia files, which are created by production or conversion after production and then are stored in the digital data recording media. For this purpose, the digitizing device 40 may be implemented using a CD source capture player, which is manufactured by Apple Co. and has the model number "G5," or a video editor, which has the product name of "Final Cut Pro." The up-conversion device 50 may be implemented using "Final Cut Pro," and the digital restoration device 60 may be implemented using a video editor, which has the product name "Diamante," and the color correction device 80 may be implemented using "Final Cut Pro."

Furthermore, the signal insertion device may be implemented using, for example, an integrated Audio/Video (A/V) editor, which has the model number of "DVS Clipster," or an integrated audio editor, which has the product name "Protools," the multiple channel conversion device 90, may be implemented using, for example, an integrated audio editor, which has the product name of "Protools", or a sound editing device, which has the model number "192I/O", "DA-88" or "DM2000," and the multitrack recording device 100 may be implemented using "Protools," "DA-88" or "DA-98." Finally, the mastering device may be implemented using a mastering device that supports the DCI standard and has the model number of "Quvis Acuity."

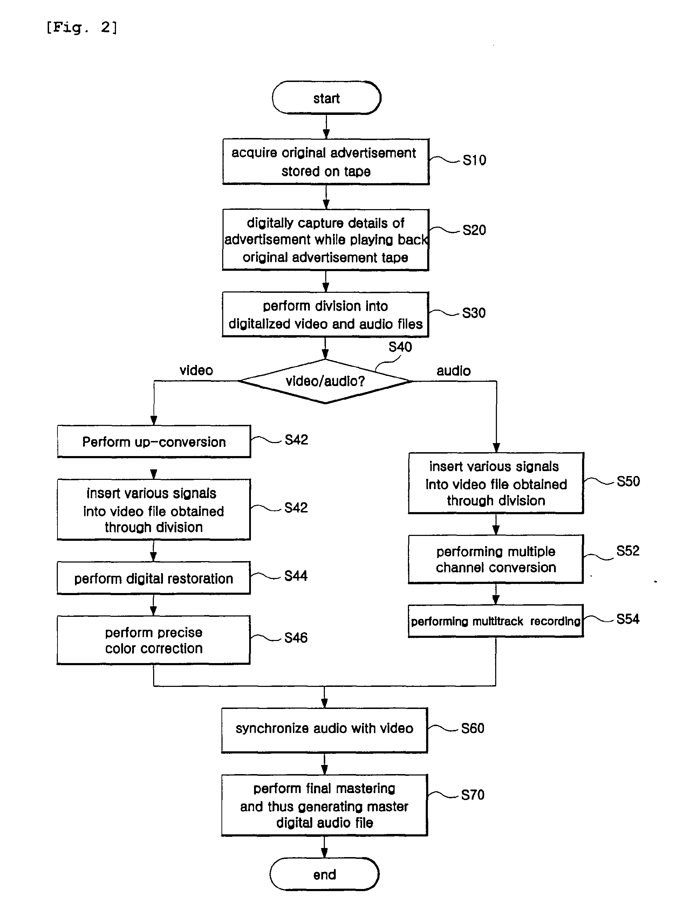

FIG. 2 is a flowchart illustrating the method of creating multimedia files according to the present invention. With reference to FIG. 2, the method of creating multimedia files for digital cinema advertising according to the present invention is described below. At step S10, various tapes on which various original advertisements are stored are acquired from advertisers and advertisement agencies. At step S20, analog format multimedia data, which is generated when an acquired original advertisement tape is played back using the 6mm tape player 10, the HD tape player 20, the digital beta tape player 30, or the analog beta tape player 35, which is appropriate for playback, is digitally captured through a process of performing conversion into digital data by the digitizing device 40 and is temporarily stored in the SAN 50. In the case where an original advertisement is already digitized and stored on a recording medium, such as a CD, a DVD or a hard disc, the digital multimedia file stored on the recording medium may be transferred to the digitizing device 40, in which case the digitizing may be omitted.

Thereafter, at step S30, the digitally captured digital multimedia file is divided into a digital audio file and a digital video file. In this case, the division into the digital audio file and the digital video file may be automatically performed in the digitizing step S20. Thereafter, at step S40, it is determined whether a file to be processed in a subsequent task is a video file or an audio file. In the case of the video file, step S42 is performed, and tasks of performing conversion of converting the frame rate of the divided SD level digital video file into a frame rate appropriate for the DCI standard, for example, a full-up conversion task of converting 30 frames into 24 frames and an up-conversion task of converting an SD level into an HD level or a 2K level. The up-conversion step S42 may be simultaneously performed along with the digitizing step S20. Furthermore, at up-conversion step S42, in order to increase convenience and accuracy for the full-up conversion task, a task of converting drop frame timecode, which is played back at 29.97 times per sec, into non-drop frame timecode, which is played back at 30 times per sec, is also performed.

Thereafter, at step S44, various signals, for example, a sync signal for the synchronization of audio included in the audio file to be played back along with digital cinema advertisement content, and a 1 kHz signal, which is a reference signal necessary for time code and Dolby encoding, are inserted. The sync signal is inserted only into a first frame. Thereafter, at step S46, the up-conversion, that is, a digital restoration process of restoring the degradation of image quality, for example, graininess, dusts, scratches, or interlacing, which occurs during a process of converting a low-resolution video into a high-resolution video, is performed. Thereafter, at step S48, precise color correction is performed. At this step S48, in the case where the original film used at the time of recording is scratched or noise occurs severely due to poor recording, such as exposure to light, a corresponding color value is taken from the forward and backward sides of a problematic frame only by several settings and a video is automatically restored, therefore colors of a video are improved.

Meanwhile, if a file obtained through the division is a digital audio file, various signals, for example, a sync signal for the synchronization of video included in the video file to be played back along with digital cinema advertising content, and a 1 kHz signal, which is a reference signal necessary for time code and Dolby encoding, are inserted into the digital audio file, which is obtained through the division, at step S50. In this process, the audio file is also compressed by 1.25 times so that the original advertisement file produced at 30 frames per sec can be appropriate for 24 frames, which is the standard frame rate in digital cinema.

Thereafter, at step S52, the digital audio file, into which the various signals are inserted, is converted into multiple channels, is converted into, for example, 5.1 or more channels in a Dolby system, a sequencing task and a sound effect insertion task are performed on the respective audio files, which are obtained through the conversion into the multiple channels as described above. In this process, a tone correction task may be performed along with the above-described tasks. At step S54, the respective digital audio files, which are obtained through the conversion into the multiple channels, are recorded into a single combined audio file in a multitrack recording manner.

Meanwhile, when a final digital video file and digital audio file are created as described above, video and audio are synchronized at step S60 using the sync signals, which are inserted into the digital video file and the digital audio file, respectively, at steps S44 and 52, and, thereafter, final mastering is performed on the digital audio file and the digital video file using the JPEG2000 encoding method, which is defined in the DCI standard, thus a single combined file is created, at step S70.

The method of creating multimedia files for digital cinema advertising according to the present invention is not limited to the above-described embodiment and may be modified and implemented in various ways within the range that is permitted by the technical spirit of the present invention. It is noted that respective devices described as components in the following claims are separated from each other functionally, rather than physically.

As described above, in accordance with the system for creating multimedia files for digital cinema advertising according to the present invention, multimedia content produced as TV advertisements is reconstructed into a digital multimedia file having a high quality image and 5.1 or more channel three-dimensional sound, so that high-quality image and sound advertising content can be provided to a digital cinema theater audience, therefore an advertising effect can be maximized and, as a result, the base of a digital cinema advertisement market can be expanded. Further, the distribution of the multimedia content can be made online at a remote place and copies thereof can be unlimitedly created without degradation of image quality or additional expenses, so that time and expenses can be saved.

## Claims

1. A system for creating multimedia files for digital cinema advertising, comprising:
a digitizing device for outputting multimedia content, which is produced as a television advertisement, as a digital video file and a digital audio file;
an up-conversion device for converting a frame rate of the digital video file, output from the digitizing device, into a frame rate appropriate for a Digital Cinema Initiatives (DCI) standard, and converting resolution of the digital video file into a relatively higher resolution;
a digital restoration device for restoring degradation of image quality of the digital video file, which occurs during the up-conversion process;
a color correction device for improving colors of a video of the digital video file;
a signal insertion device for inserting various predetermined signals, including a sync signal, into the digital video file and the digital audio file, which are output from the digitizing device;
a multiple channel conversion device for dividing the digital audio file into multiple channels, and performing a sequencing task, insertion of sound effects, or correction of tone;
a multitrack recording device for generating a combined digital audio file by recording digital audio files, which are obtained through conversion into the multiple channels by the multiple channel conversion device, together in a predetermined format;
a synchronization device for synchronizing the digital video file with the digital audio file using the sync signal;
a mastering device for performing mastering on the synchronized digital video and audio files using standard encoding, and thus generating a final master digital multimedia file; and
a Storage Area Network (SAN) for temporarily storing intermediate results generated by the respective devices.

2. A method of creating multimedia files for digital cinema advertising, comprising the steps of:
(a) operating a tape playback device, digitally capturing any of various types of analog format multimedia content that are played back using various tapes on which original advertisements are stored or accessing a digital recording medium, and generating a digital multimedia file;
(b) dividing the digital multimedia file into a digital audio file and a digital video file;
(c) performing full-up conversion of converting a frame rate of the digital video file, which is obtained through the division, into a frame rate appropriate for a DCI standard, and performing up-conversion of converting resolution of the digital video file into a relatively higher resolution;
(d) performing digital restoration of inserting various signals, including a sync signal, into the up-converted digital video file and restoring the degradation of image quality, which occurs during the up-conversion process, and performing color correction for improving colors of the digitally restored video;
(e) performing the insertion of the various signals, including the sync signal, conversion into multiple channels, and multitrack recording on the digital audio file obtained through the division; and
(f) encoding the digital video file and the digital audio file according to a predetermined DCI standard while the digital video file and the digital audio file, which has undergone step (d) and step (e), are synchronized, and thus generating a final digital multimedia file.
